# EUROPEAN PATENT SPECIFICATION

(11) **EP 3 195 097 B1**
(45) Date of publication and mention of the grant of the patent: **29.07.2020**
(21) Application number: 14902094.3
(22) Date of filing: 16.09.2014
(51) Int. Cl.: G06F 3/0488, G06F 3/041, G06F 1/16

(54) **GENERATION OF A TOUCH INPUT SIGNATURE FOR DISCRETE CURSOR MOVEMENT**
ERZEUGUNG EINER BERÜHRUNGSEINGABESIGNATUR FÜR DISKRETE CURSORBEWEGUNG
GÉNÉRATION D'UNE SIGNATURE D'ENTRÉE TACTILE POUR UN MOUVEMENT DE CURSEUR DISCRET

(43) Date of publication of application: 26.07.2017
(73) Proprietor: Hewlett-Packard Development Company, L.P., Spring TX 77389 (US)
(72) Inventor: KASRAVI, Kas, West Bloomington, MI 48323 (US); NIKOLSKY, Oleg Vassilievich, Pontiac, Michigan 48341 (US)
(74) Representative: Stöckeler, Ferdinand
(86) International application number: PCT/US2014/055892
(87) International publication number: WO 2016/043720

(56) References cited:
- EP-A2- 1 615 109
- WO-A1-98/19292
- WO-A1-2013/135972
- CN-A- 103 645 845
- US-A1- 2009 262 086
- US-A1- 2011 041 102
- US-A1- 2011 320 978
- US-A1- 2014 028 554
- US-A1- 2014 028 575
- US-A1- 2014 168 057
- US-A1- 2014 247 251

## Description

Computing devices such as laptops, smart phones, and tablets have increased in popularity. Many individuals own at least one (if not multiple) of these types devices, which may frequently be used for personal tasks such as checking email, browsing the Internet, taking photos, playing games, and other such activities. Additionally, these devices are also being used to perform basic business related tasks, such as email, accessing business web services, and internet browsing.

Document EP 1,615,109 A2 discloses an interactive display table for recognizing gestures. In WO 98/19292 A1 a pattern recognition system and in US 2014/028 554 A1 a method for recognizing gestures on a tactile input device are disclosed. The document CN 103 645 845 A discloses a clicking control method and a terminal. In US 2011/041102 A1a mobile terminal and a method for controlling the same is described. In US 2011/320 978 A1 and in US 2014/028 575 A1 methods and devices for gesture and touch input detection are disclosed.

Document US 2014/168057 A1 discloses a handheld computing device with an accelerometer and gyroscope configured to detect taps performed by a user on a surface of the device to control an operation of the device. In one example, a tap is used to move a text cursor to a previous or next character, word or line. During operation, sensor data from the accelerometer or gyroscope are compared to a training data set to determine that a tap was performed by the user in case of an approximate match (e.g. within a threshold). To obtain the training data set, the user is requested to tap multiple times on one side of the device.

Document US 2014/247251 A1 discloses a computing apparatus with a touchscreen user interface and a personalised touch event filter that includes a touch trainer module to generate a user touch profile based upon user touch input received at the touchscreen user interface. In general, the touch trainer may generate a user's touch habit and adjusted thresholds or touch properties associated with the user. The generated user touch profile may include the size and shape of a user's digit that interacts with the touchscreen, the pressure applied when the touchscreen is engaged, the rapidity of movement of a user's digit across the touchscreen, the interval between taps when more than one tap is used to engage the touchscreen, and so forth. The user touch profile may be generated and updated during initial training, as well as during device use when an actual application is running and the user touch input is received to direct operations to be performed.

### SUMMARY OF THE INVENTION

The invention is defined in the appended independent claims 1, 6, and 11. Preferred embodiments are defined in the dependent claims.

### BRIEF DESCRIPTION OF THE DRAWINGS

The following detailed description references the drawings, in which:
FIG. 1 illustrates a block diagram of a computing system having a touch input analysis module and touch input signature generation module for generating a touch input signature for discrete cursor movement according to examples of the present disclosure;
FIG. 2 illustrates a block diagram of a computing system having touch input analysis instructions and touch input signature generation instructions for generating a touch input signature for discrete cursor movement according to examples of the present disclosure;
FIG. 3 illustrates a non-transitory computer-readable storage medium storing instructions to generate a touch input signature for discrete cursor movement according to examples of the present disclosure;
FIG. 4 illustrates a flow diagram of a method to generate a touch input signature for discrete cursor movement according to examples of the present disclosure;
FIG. 5 illustrates a flow diagram of a method to generate a touch input signature for discrete cursor movement according to examples of the present disclosure;
FIG. 6 illustrates a plot diagram of a signal corresponding to a training touch input generated by a sensor in a computing system having a touch input analysis module and touch input signature generation module according to examples of the present disclosure;
FIGS. 7A-7D illustrate plot diagrams of training touch input signals corresponding to four separate training touch inputs according to examples of the present disclosure;
FIG. 8 illustrates a plot diagram of the training touch input signals corresponding to the training touch inputs of FIGS. 7A-7C according to examples of the present disclosure;
FIG. 9 illustrates a plot diagram of a touch input signature based on the three training touch input signals corresponding to the training touch inputs of FIGS. 7A-7C according to examples of the present disclosure;
FIG. 10 illustrates a plot diagram of a touch input signature as a tolerance band having an outer bound and an inner bound according to examples of the present disclosure;
FIG. 11 illustrates block diagram of an active touch input signature training process according to examples of the present disclosure; and
FIG. 12 illustrates a block diagram of a passive touch input signature training process according to examples of the present disclosure.

### DETAILED DESCRIPTION

Computing devices (or computing systems) such as laptops, smart phones, and tablets have increased in popularity. Many individuals own at least one (if not multiple) of these types devices, which may frequently be used for personal tasks such as checking email, browsing the Internet, taking photos, playing games, and other such activities. Additionally, these devices are also being used to perform basic business related tasks, such as email, accessing business web services, and internet browsing.

To perform the desired tasks and functions, users interact with these computing systems by providing a variety of inputs. For example, a user may enter text on a physical keyboard attached to such a computing system. Similarly, the user may enter text on a "soft" keyboard that appears on a touch display of such a computing system. For instance, a user of a mobile smart phone may wish to compose an email or a text message. To do so, the user may select the appropriate application (e.g., email application or text messaging application) by clicking or tapping on the mobile smart phone's touch screen. Once the appropriate application is running, the user may then proceed to input the desired text using the soft keyboard displayed on the touch screen by selecting or tapping the appropriate characters. Users may perform other tasks on their computing systems that utilize user inputs such as office productivity software, gaming software, image editing software, computer aided design software, and the like.

To provide such inputs, the users of such devices face the limitations of touch screen implementations. For instance, a user may frequently mistype a word because the on-screen keyboard is small in comparison to the user's fingers. That is, a user may mean to press one key and instead presses an adjacent key. To correct this error, the user moves the cursor back to the position of the mistake and makes the appropriate correction. However, moving the cursor to a particular location can be difficult on such touch screen devices. More generally, touch screen devices lack precise and discrete input ability, specifically as it relates to the position and movement of a cursor. This shortcoming limits and negatively affects the manner in which applications are implemented and used, limits the usefulness of the computing system, and causes user frustration.

Currently, techniques for providing user input to a computing system include touchscreens, mice, styluses, mechanical buttons, software buttons, and voice commands. These current techniques fail to provide precise cursor control on touchscreen devices. For example, touchscreens are inherently inaccurate, mice and styluses need to be carried as an extra device, software or screen buttons take up space and add to the cost of the computing system, and voice command are not intended for, nor do they provide, precision cursor control.

Some computing systems implement techniques for performing a discrete cursor movement responsive to a touch input on the computing system. However, existing discrete cursor movement techniques do not account for variations in taps among different users. For example, a user with a handicap may provide touch inputs in a different way than a non-handicap user. Consequently, common touch input detection patterns for a computing system may not be ideal for every user as errors may be introduced when interfacing with the computing system via the touch inputs.

Various implementations are described below by referring to several example techniques to generate a touch input signature for discrete cursor movement. In one example implementation according to aspects of the present disclosure, a plurality of signals generated by a sensor of a computing system is analyzed. The plurality of signals correspond to a series of training touch inputs received on a surface of the computing system. A touch input signature for discrete cursor movement is then generated based on the plurality of signals corresponding to the series of training touch inputs. Other examples of techniques for generating a touch input signature are described below.

In some implementations, the discrete cursor movement techniques described herein save the user frustration when discrete or high precision cursor movement is needed. Moreover, applications may provide increased functionality as a result of the ability to provide discrete cursor movements without the added cost of additional hardware components. Additionally, these techniques provide for both active and passive touch input signature generation. These and other advantages will be apparent from the description that follows.

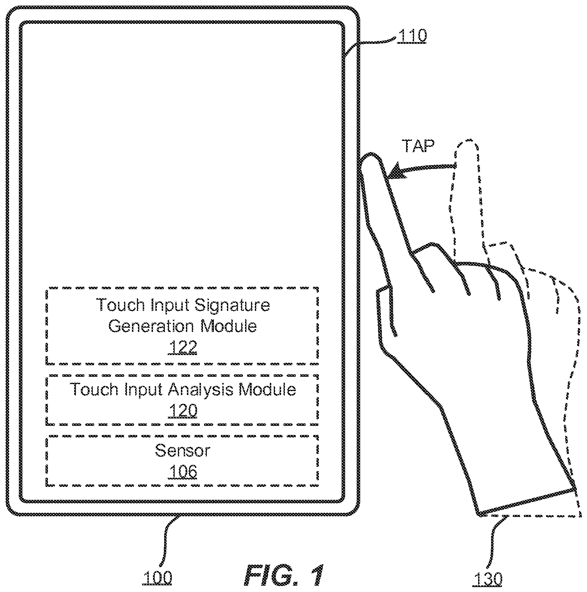

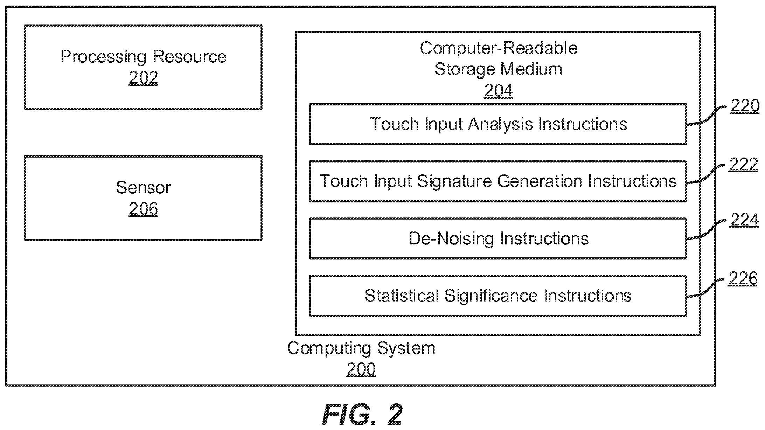

Generally, FIGS. 1-3 relate to components and modules of a computing system, such as computing system 100 of FIG. 1 and computing system 200 of FIG. 2. It should be understood that the computing systems 100 and 200 may include any appropriate type of computing system and/or computing device, including for example smartphones, tablets, desktops, laptops, workstations, servers, smart monitors, smart televisions, digital signage, scientific instruments, retail point of sale devices, video walls, imaging devices, peripherals, networking equipment, and wearable computing devices like smart watches, smart glasses, and other smart computing apparel.

FIG. 1 illustrates a block diagram of a computing system 100 having a touch input analysis module and touch input signature generation module for generating a touch input signature for discrete cursor movement according to examples of the present disclosure. In particular, the computing system 100 may detect a series of training touch inputs (or "taps") from a user hand 130 (or in another appropriate way such as by a user finger, head, arm, etc.) via a sensor 106, analyze signals generated by the sensor 106 corresponding to the training touch inputs, and generate a touch input signature based on the analysis of the signals corresponding to the series of training touch inputs. Thus, when a user taps the computing system 100, a discrete cursor movement may be implemented on the device based on the touch input signature. The discrete cursor movement causes the cursor to move a discrete amount (or to a particular location), move to a discrete menu item or button, or to discretely select an object, menu item, or button, or another similar action is performed.

FIG. 1 includes particular components, modules, etc. according to various examples. However, in different implementations, more, fewer, and/or other components, modules, arrangements of components/modules, etc. may be used according to the teachings described herein. In addition, various components, modules, etc. described herein may be implemented as one or more software modules, hardware modules, special-purpose hardware (e.g., application specific hardware, application specific integrated circuits (ASICs), embedded controllers, hardwired circuitry, etc.), or some combination of these.

It should be understood that the computing system 100 may include any appropriate type of computing device, including for example smartphones, tablets, desktops, laptops, workstations, servers, smart monitors, smart televisions, digital signage, scientific instruments, retail point of sale devices, video walls, imaging devices, peripherals, wearable computing devices, or the like.

In the example illustrated in FIG. 1, the computing system 100 represents a mobile device, such as a smart phone or tablet computer, although other suitable devices are also possible. The computing system 100 includes a sensor 106, a touch input analysis module 120, a touch input signature generation module 122, and a display 110. The sensor 106, the touch input analysis module 120, and the touch input signature generation module 122 are shown with dashed lines to represent that the components are partially or wholly within the computing system 100 and may not be visible externally to the computing system 100. In other examples, the computing system 100 may include additional components, such as processing resources, memory resources, additional sensors, and the like. In examples, the sensor 106 may represent a variety of different sensors, including accelerometers, gyroscopes, magnetometer, manometer, and the like.

The touch input analysis module 120 of the computing system 100 analyzes signals generated by a sensor 106. The signals correspond to a series of training touch inputs detected by the sensor 106. For example, hand 130 may "tap" or similarly touch a surface of the computing system 100 so as to create a touch input. The touch input is registered by the sensor 106, which generates a signal responsive to the touch input being detected.

Once the touch input (or "tap") is detected by the computing system 100 and the signal is generated by the sensor 106, the touch input analysis module 120 analyzes the signal generated by the sensor 106. In examples, a series of training touch inputs may be received on the computing system 100 and recognized by the sensor 106. The sensor 106 may then generate a plurality of signals corresponding to each of the training touch inputs. The plurality of signals are then analyzed by the touch input analysis module 120.

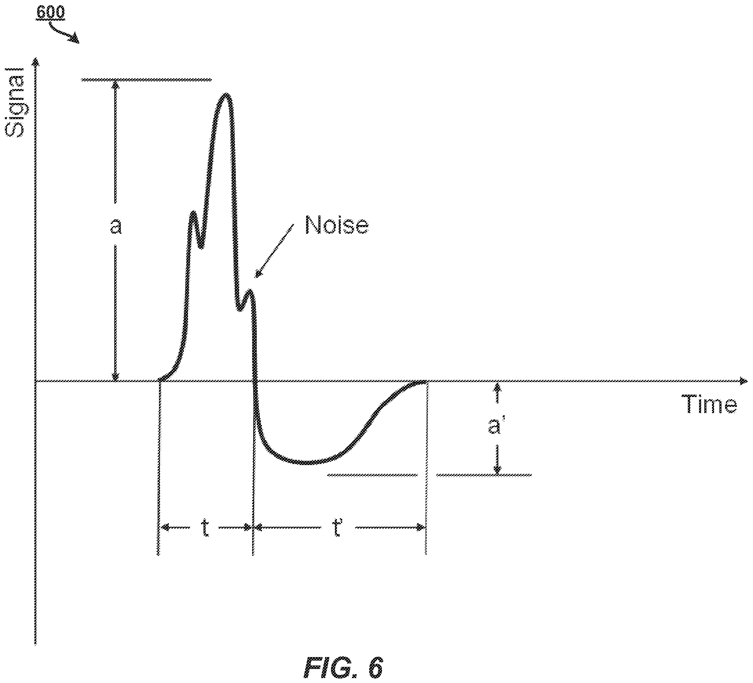

In examples, the touch input analysis module 120 may apply a discrete wavelet transform procedure to de-noise the signals generated by the sensor 106. Any noise present in the signal generated by the sensor 106 is reduced and/or removed by the de-noising procedures. For example, FIG. 6 illustrates a signal generated by the sensor 106 and corresponding to a training touch input received on the computing system 100. The signal includes noise, which may be undesirable. Consequently, the de-noising procedure may remove the noise from the signal. FIG. 6 is discussed in more detail below.

In other examples, the de-noising procedure may apply other de-noising procedures other than the discrete wavelet transform procedure, such as by using other types of appropriate wavelet transforms, digital signal processing for time-frequency analysis, or any other suitable transform procedure such as Kalman filters, recursive least square filters, Bayesian mean square error procedure, etc. Moreover, in some examples, a custom data filtering procedure may be implemented.

Additionally, the touch input analysis module 120 analyzes which surface of the computing system 100 received the touch. For example, although FIG. 1 illustrates the hand 130 touching the left surface of the computing system 100, any of the left, right, top, and/or bottom surfaces may be similarly tapped or touched. Additionally, the front surface (such as the display 110) and/or the rear surface (not shown) may be similarly tapped or touched in examples.

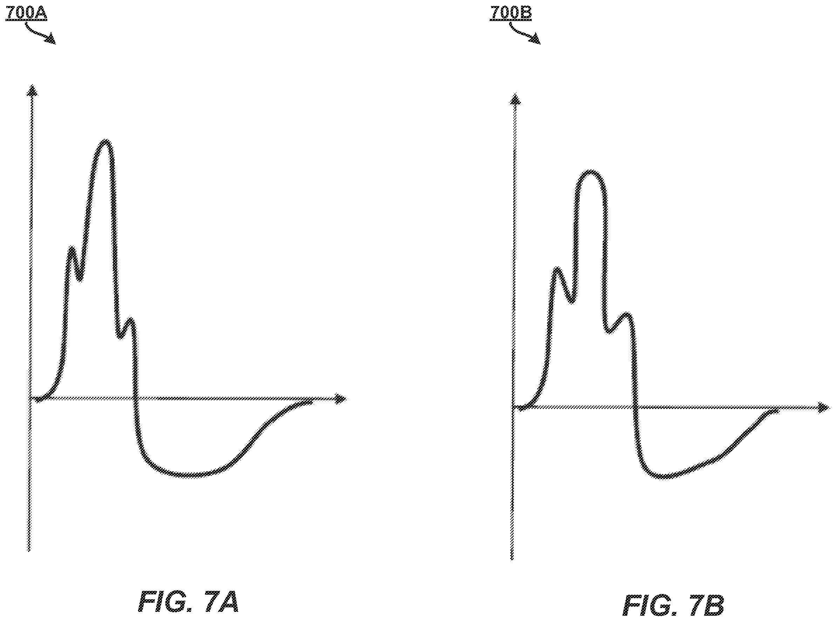

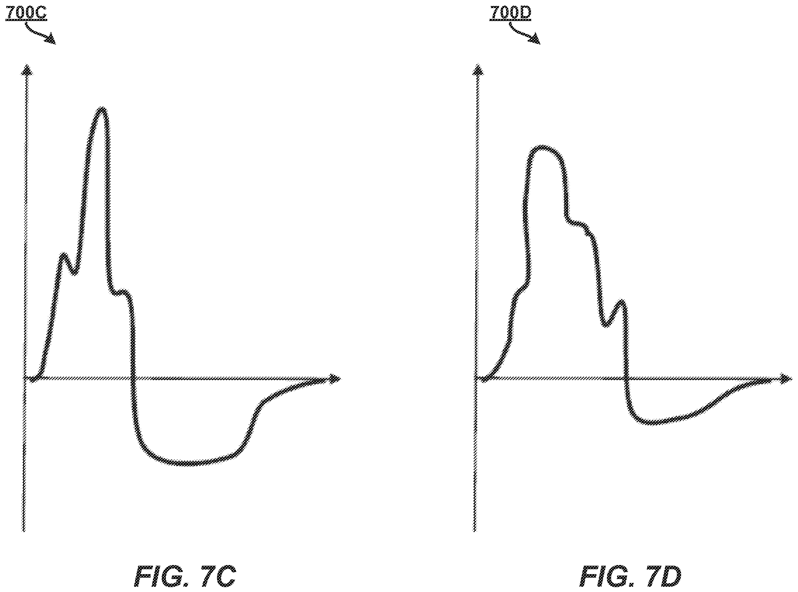

The touch input analysis module 120 may also detect outliers within the plurality of signals generated by the sensor 106. For example, FIGS. 7A-7D illustrate four signals generated by the sensor 106 and corresponding to four training touch inputs received on the computing system 100. The training touch inputs illustrated in FIGS. 7A-7C represent substantially similar training touch inputs. However, the training touch input signal illustrated in FIG. 7D represents an outlier training touch input (i.e., a training touch input that is substantially different from the other training touch inputs). FIGS. 7A-7D are discussed in more detail below.

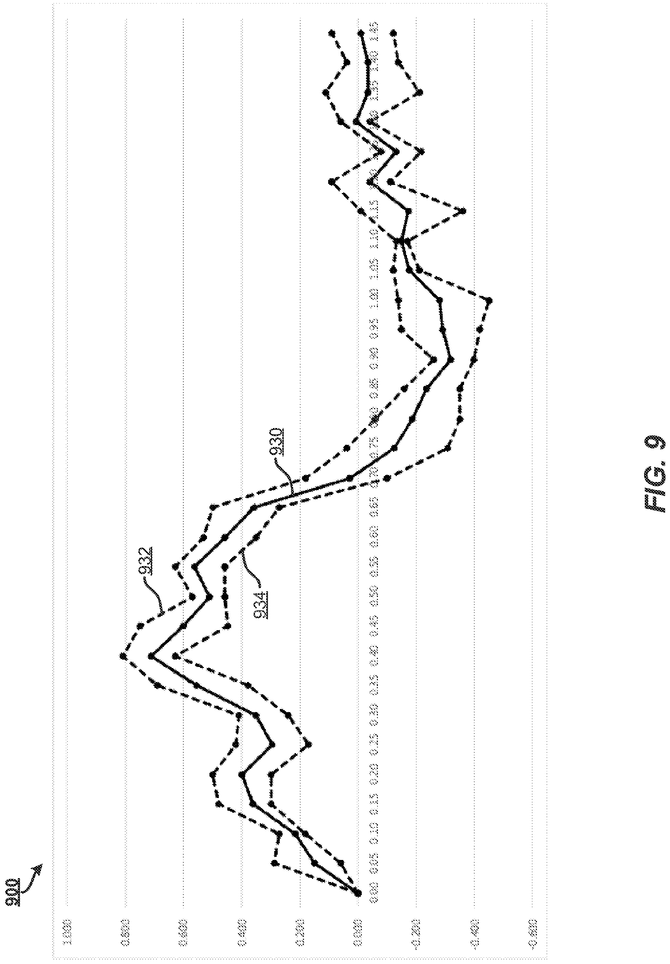

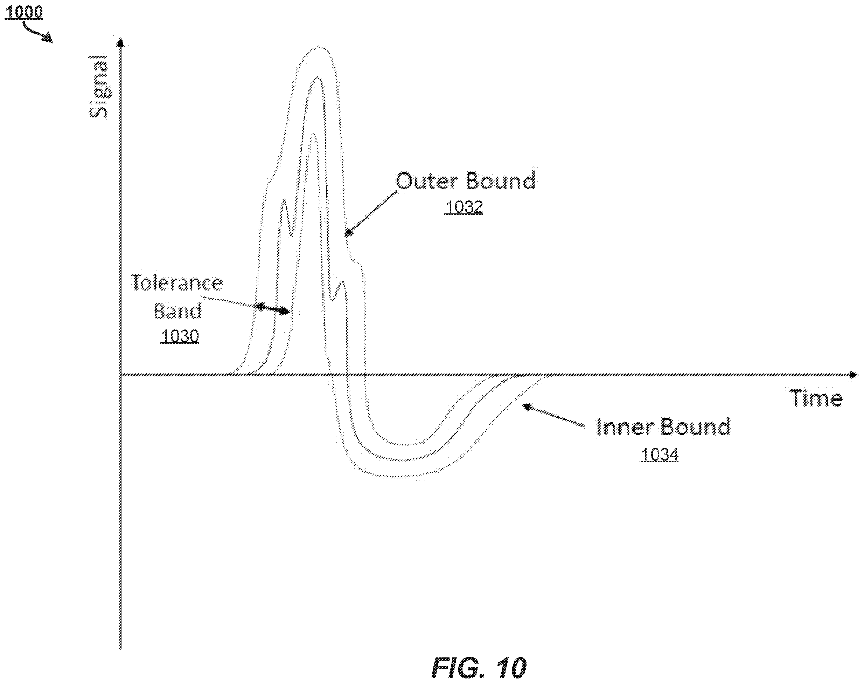

After the signal generated by the sensor 106 has been analyzed by the touch input analysis module 120, the touch input signature generation module 122 generates a touch input signature based on the analysis of the signals corresponding to the detected series of training touch inputs. For example, the touch input signature generation module 122 compares the training touch input signals, for example, by plotting the signals to find maximum, minimum, average, etc. values for the training touch input signals. An example of such a plot is illustrated in FIG. 9, which is described more fully below. From these values, a touch input signature may be generated based on the values. In examples, the touch input signature may be represented as a tolerance band with an outer bound and an inner bound, such as illustrated in FIG. 10 and described in more detail below.

FIG. 2 illustrates a block diagram of a computing system 200 having touch input analysis instructions 220 and touch input signature generation instructions 222 for generating a touch input signature for discrete cursor movement according to examples of the present disclosure. The computing system 200 may include a processing resource 202 that represents generally any suitable type or form of processing unit or units capable of processing data or interpreting and executing instructions. The processing resource 202 may be one or more central processing units (CPUs), microprocessors, and/or other hardware devices suitable for retrieval and execution of instructions, such as instructions 220, 222, 224, 226.

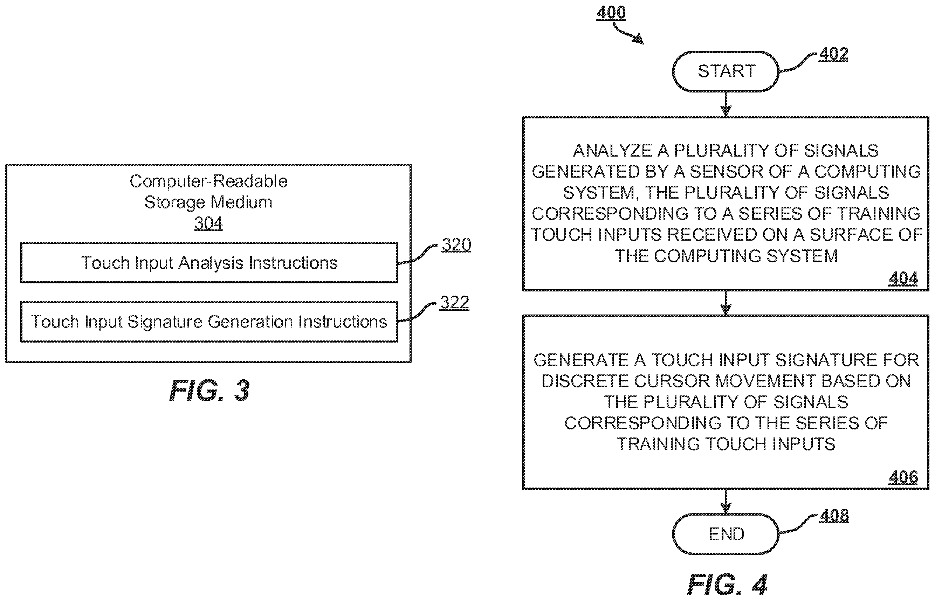

The instructions, such as instructions 220, 222, 224, 226 may be stored, for example, on a memory resource, such as computer-readable storage medium 204 (as well computer-readable storage medium 304 of FIG. 3), which may include any electronic, magnetic, optical, or other physical storage device that store executable instructions. Thus, the memory resource may be, for example, random access memory (RAM), electrically-erasable programmable read-only memory (EPPROM), a storage drive, an optical disk, and any other suitable type of volatile or non-volatile memory that stores instructions to cause a programmable processor to perform the techniques described herein. In examples, the memory resource includes a main memory, such as a RAM in which the instructions may be stored during runtime, and a secondary memory, such as a nonvolatile memory in which a copy of the instructions is stored.

Alternatively or additionally, the computing system 200 may include dedicated hardware, such as one or more integrated circuits, Application Specific Integrated Circuits (ASICs), Application Specific Special Processors (ASSPs), Field Programmable Gate Arrays (FPGAs), or any combination of the foregoing examples of dedicated hardware, for performing the techniques described herein. In some implementations, multiple processing resources (or processing resources utilizing multiple processing cores) may be used, as appropriate, along with multiple memory resources and/or types of memory resources.

In addition, the computing system 200 may include a sensor 206, which may represent one or more of a variety of different sensors, including accelerometers, gyroscopes, magnetometer, manometer, and the like. In examples, the sensor 206 may be a single-axis or multi-axis accelerometer.

The computer-readable storage medium 204 is non-transitory in the sense that it does not encompass a transitory signal but instead is made up of one or more memory components configured to store the instructions 220, 222, 224, 226. The computer-readable storage medium may be representative of a memory resource and may store machine executable instructions such as instructions 220, 222, 224, 226, which are executable on a computing system such as computing system 100 of FIG. 1 and/or computing system 200 of FIG. 2.

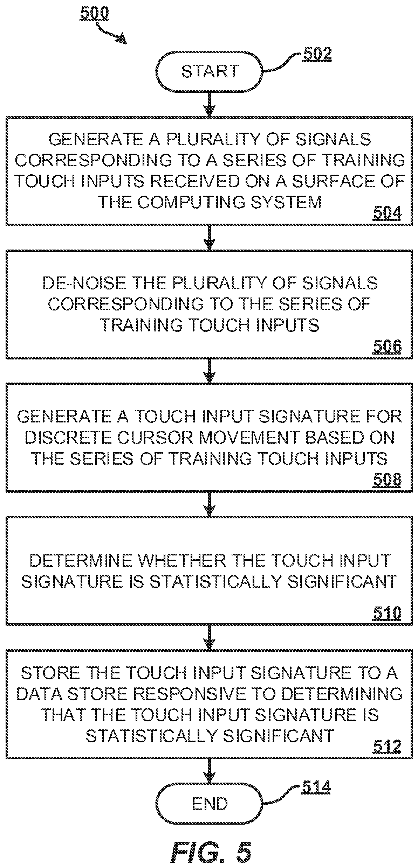

In the example shown in FIG. 2, the instructions may include touch input analysis instructions 220, touch input signature generation instructions 222, de-noising instructions 224, and statistical significance instructions 226. The instructions of the computer-readable storage medium 304 may be executable so as to perform the techniques described herein, including the functionality described regarding the method 500 of FIG. 5 as discussed below but should not be construed as so limiting.

The touch input analysis instructions 220 analyzes signals generated by the sensor 206. The signals correspond to a series of training touch inputs detected by the sensor 206. The touch input is registered by the sensor 206, which generates a signal responsive to the touch input being detected. Once the touch input (or "tap") is detected by the computing system 200 and the signal is generated by the sensor 206, the touch input analysis instructions 220 analyze the signal generated by the sensor 206. In examples, a series of training touch inputs may be received on the computing system 200 and recognized by the sensor 206. The sensor 206 may then generate a plurality of signals corresponding to each of the training touch inputs. The plurality of signals are then analyzed by the touch input analysis instructions 220.

The touch input analysis instructions 220 may also detect outliers within the plurality of signals generated by the sensor 206. For example, FIGS. 7A-7D illustrate four signals generated by the sensor 106 and corresponding to four training touch inputs received on the computing system 100. The training touch inputs illustrated in FIGS. 7A-7C represent substantially similar training touch inputs. However, the training touch input signal illustrated in FIG. 7D represents an outlier training touch input (i.e., a training touch input that is substantially different from the other training touch inputs). FIGS. 7A-7D are discussed in more detail below.

The touch input signature generation instructions 222 generate a touch input signature based on the analysis of the signals corresponding to the detected series of training touch inputs. For example, the touch input signature generation instructions 222 compare the training touch input signals, for example, by plotting the signals to find maximum, minimum, average, etc. values for the training touch input signals. An example of such a plot is illustrated in FIG. 9, which is described more fully below. From these values, a touch input signature may be generated based on the values. In examples, the touch input signature may be represented as a tolerance band with an outer bound and an inner bound, such as illustrated in FIG. 10 and described in more detail below.

The de-noising instructions 224 may apply a discrete wavelet transform procedure to de-noise the signals generated by the sensor 206. Any noise present in the signal generated by the sensor 206 is reduced and/or removed by the de-noising procedures. For example, FIG. 6 illustrates a signal generated by the sensor 206 and corresponding to a training touch input received on the computing system 200. The signal includes noise, which may be undesirable. Consequently, the de-noising procedure may remove the noise from the signal. FIG. 6 is discussed in more detail below.

The de-noising instructions 224 may apply other de-noising procedures other than the discrete wavelet transform procedure, such as by using other types of appropriate wavelet transforms, digital signal processing for time-frequency analysis, or any other suitable transform procedure such as Kalman filters, recursive least square filters, Bayesian mean square error procedure, etc. Moreover, in some examples, a custom data filtering procedure may be implemented.

The statistical significance instructions 226 determine whether a touch input signature is statistically significant. For example, statistical significance techniques may be applied to the touch input signature to test the touch input signature to determine whether to accept or to reject the touch input signature. If the touch input signature is statistically significant, the generated touch input signature is stored in a data store such as a touch input signature profiles database. The touch input signature stored in the touch input signature profiles database may be useful to detect touch inputs in the future, such as when determining whether to perform a discrete cursor movement. However, if the touch input signature is not statistically significant, new and/or additional training touch inputs may be utilized.

FIG. 3 illustrates a non-transitory computer-readable storage medium storing instructions to generate a touch input signature for discrete cursor movement according to examples of the present disclosure. The computer-readable storage medium 304 is non-transitory in the sense that it does not encompass a transitory signal but instead is made up of one or more memory components configured to store the instructions. The computer-readable storage medium may be representative of a memory resource such as computer-readable storage medium 204 of FIG. 2 and may store machine executable instructions, which are executable on a computing system such as computing system 100 of FIG. 1 and/or computing system 200 of FIG. 2.

In the example shown in FIG. 3, the instructions may include touch input analysis instructions 320 and touch input signature generation instructions 322. The instructions of the computer-readable storage medium 304 may be executable so as to perform the techniques described herein, including the functionality described regarding the method 400 of FIG. 4 but should not be construed as so limiting.

In particular, FIG. 4 illustrates a flow diagram of a method 400 to generate a touch input signature for discrete cursor movement according to examples of the present disclosure. The method 400 may be stored as instructions on a non-transitory computer-readable storage medium such as computer-readable storage medium 304 of FIG. 3 or another suitable memory such as a memory resource that, when executed by a processor (e.g., processing resource 202 of FIG. 2), cause the processor to perform the method 400. It should be appreciated that the method 400 may be executed by a computing system or a computing device such as computing system 100 of FIG. 1 and/or computing system 200 of FIG. 2.

At block 402, the method 400 begins and continues to block 404. At block 404, the method 400 includes analyzing a plurality of signals generated by a sensor (e.g., sensor 106 of FIG. 1 and/or sensor 206 of FIG. 2) of a computing system, the plurality of signals corresponding to a series of training touch inputs received on a surface of the computing system. The analysis may be performed, for example, by the touch input analysis module 120 of FIG. 1, the touch input analysis instructions 220 of FIG. 2, and/or the touch input analysis instructions 320 of FIG. 3. The method 400 then continues to block 406.

At block 406, the method 400 includes generating a touch input signature for discrete cursor movement based on the plurality of signals corresponding to the series of training touch inputs. The generating may be performed, for example, by the touch input signature generation module 122 of FIG. 1, the touch input signature generation instructions 222 of FIG. 2, and/or the touch input signature generation instructions 322 of FIG. 3. The method 400 continues to block 408 at which point the method 400 terminates.

Additional processes also may be included. For example, the method 400 may include determining whether the touch input signature is statistically significant and storing the touch input signature to a data store responsive to determining that the touch input signature is statistically significant, which may be performed by the statistical significance instructions 324 of FIG. 2 for example. The method 400 may also include de-noising the plurality of signals corresponding to the series of training touch inputs, which may be performed by the de-noising instructions 226 of FIG. 2 for example. The de-noising may be performed by any of a variety of suitable wavelet transforms, such as a discrete wavelet transform, or others as described herein. It should be understood that the processes depicted in FIG. 4 represent illustrations, and are not meant to limit the scope of the present invention as defined by the appended claims.

FIG. 5 illustrates a flow diagram of a method 500 to generate a touch input signature for discrete cursor movement according to examples of the present disclosure. The method 500 may be executed by a computing system or a computing device such as computing system 100 of FIG. 1 and/or computing system 200 of FIG. 2. The method 500 may also be stored as instructions on a non-transitory computer-readable storage medium such as computer-readable storage medium 204 of FIG. 2 and/or computer-readable storage medium 304 of FIG. 3 that, when executed by a processor such as processing resource 202 of FIG. 2, cause the processor to perform the method 500.

At block 502, the method 500 begins and continues to block 504. At block 504, the method 500 includes a computing system (e.g., computing system 100 of FIG. 1 and/or computing system 200 of FIG. 2) generating a plurality of signals corresponding to a series of training touch inputs received on a surface of the computing system. The method 500 continues to block 506.

At block 506, the method 500 includes the computing system de-noising the plurality of signals corresponding to the series of training touch inputs. De-noising the plurality of signals may include applying a discrete wavelet transform to the plurality of signals in examples. De-noising the signals may be performed, for example, by the de-noising instructions 224 of FIG. 2. In examples, the touch input analysis module 120 of FIG. 1 and/or the touch input analysis instructions of FIGS. 2 and 3 may also perform the de-noising techniques. The method 500 then continues to block 508.

At block 508, the method 500 includes the computing system generating a touch input signature for discrete cursor movement based on the series of training touch inputs. The touch input signature may be generated, for example, by the touch input signature generation module 122 of FIG. 1 and/or the touch input signature generation instructions of FIGS. 2 and 3. The method 500 then continues to block 510.

At block 510, the method 500 includes the computing system determining whether the touch input signature is statistically significant. The statistical significance may be determined, for example, by the statistical significance instructions 226 of FIG. 2. If it is determined that the touch input signature is statistically significant, the method 500 continues to block 512, and the computing system stores the touch input signature to a data store. The method 500 then continues to block 514 and terminates.

Additional processes also may be included, and it should be understood that the processes depicted in FIG. 5 represent illustrations, and are not meant to limit the scope of the present invention as defined by the appended claims.

FIG. 6 illustrates a plot diagram 600 of a signal corresponding to a training touch input generated by a sensor in a computing system having a touch input analysis module and touch input signature generation module according to examples of the present disclosure. For example, FIG. 6 illustrates a typical impulse signal induced by a touch input (or "tap"), where "a" represents the amplitude of the touch input, "a"' represents the rebounding effect of the computing system in the opposite direction as a result of the touch input, "t" represents the duration of the touch input, and "t'" represents the duration of the rebounding effect after the touch input. Each axis will behave similarly. The time at which "a" is detected is the indication of the touch input. Due to ambient conditions, certain noise may be introduced in the impulse signal as illustrated. Reducing or removing this noise improves the signal and assists in isolating and interpreting the tap. In examples, the values of "a", "a"', "t", and "t"' are determined against suitable thresholds to avoid false-positive taps and/or false-negative taps. It should be understood that the signal illustrated in FIG. 6 is merely a possible response signal responsive to a touch input and that many variations on the illustrated signal are possible. The variety of signals produced may depend on, among other factors, the material the computing system is made from, the manner in which the user initiates and completes the touch input, the type of sensor used in the computing system, environmental variables, and other factors.

FIGS. 7A-7D illustrate plot diagrams 700A-700D of training touch input signals corresponding to four separate training touch inputs according to examples of the present disclosure. In the present example, FIGS. 7A-7C are considered to be similar or substantially similar while FIG. 7D is considered to be an outlier (i.e., not substantially similar to FIGS. 7A-7C). Statistical analysis may be used to determine acceptable measures of similarity. In examples, the statistical analysis of the signatures may be discrete or continuous.

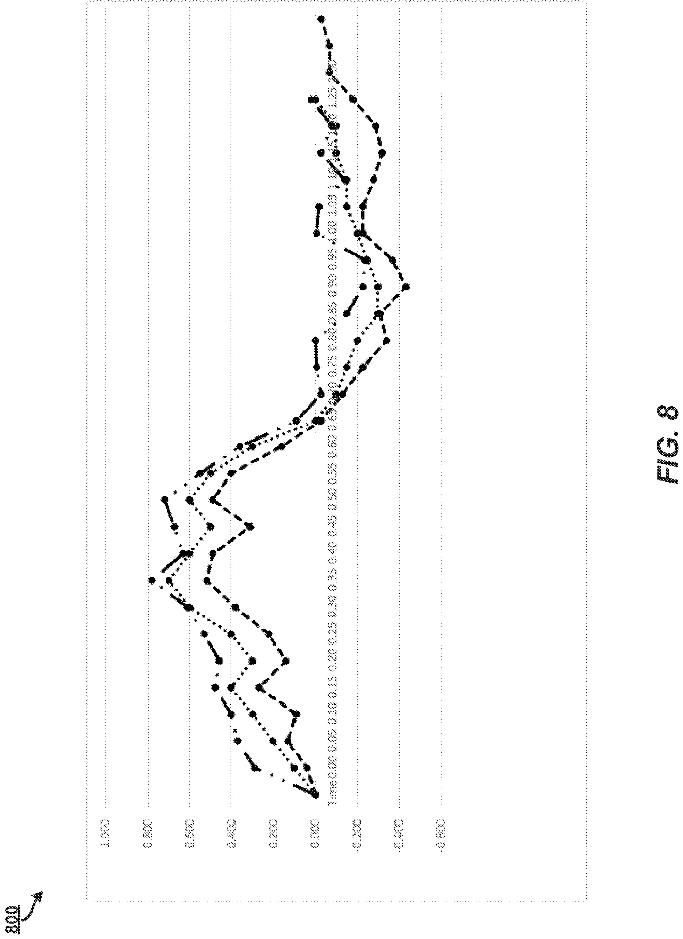

FIG. 8 illustrates a plot diagram 800 of the training touch input signals corresponding to the training touch inputs of FIGS. 7A-7C according to examples of the present disclosure. In particular, FIG. 8 illustrates three signals corresponding to training touch inputs. In examples, signal 1 may correspond to the training touch input signal of FIG. 7A, signal 2 may correspond to the training touch input signal of FIG. 7B, and signal 3 may correspond to the training touch input signal of FIG. 7C. The plot diagram of FIG. 8 plots the signal strength over time periods (e.g., 0.05 second internals). As illustrated, variances exist among the three training touch input signals, with some variances being greater (e.g., the variance at time 0.05) and some variances being smaller (e.g., the variance at time 0.35). From these training touch input signals, a training touch input signature can be generated, as illustrated in FIG. 9.

In particular, FIG. 9 illustrates a plot diagram 900 of a touch input signature based on the three training touch input signals corresponding to the training touch inputs of FIGS. 7A-7C according to examples of the present disclosure. The plot diagram 900 of FIG. 9 includes an average training touch input 930, a maximum training touch input 932, and a minimum training touch input 934. In this example, the maximum training touch input 932 and the minimum training touch input 934 represent maximum and minimum values detected in the training touch inputs of FIGS. 7A-7C. Similarly, the average training touch input 930 represents the average (i.e., mean) value of the detected training touch inputs of FIGS. 7A-7C. In examples, other techniques may be used to compute the touch input signature, including cardinal splines and moving averages.

FIG. 10 illustrates a plot diagram 1000 of a touch input signature as a tolerance band having an outer bound and an inner bound according to the present invention. More specifically, FIG. 10 illustrates an example of a touch input signature generated during a touch input training process (such as a result of method 400 of FIG. 4 and/or method 500 of FIG. 5). In this example, a touch input signature is illustrated as a tolerance band 1030 having an outer bound 1032 and an inner bound 1034. According to the present invention, the geometry of the touch input signature captures the range of touch inputs provided by a user in a personalized manner. Future touch inputs that fall within the tolerance band are recognized and accepted (i.e., a discrete cursor movement results), while touch inputs that fall outside the tolerance band are rejected (i.e., no discrete cursor movement results). In examples, touch inputs falling partially within the tolerance band (e.g., 90%, 95%, or 98% within the tolerance band) may result in a discrete cursor movement.

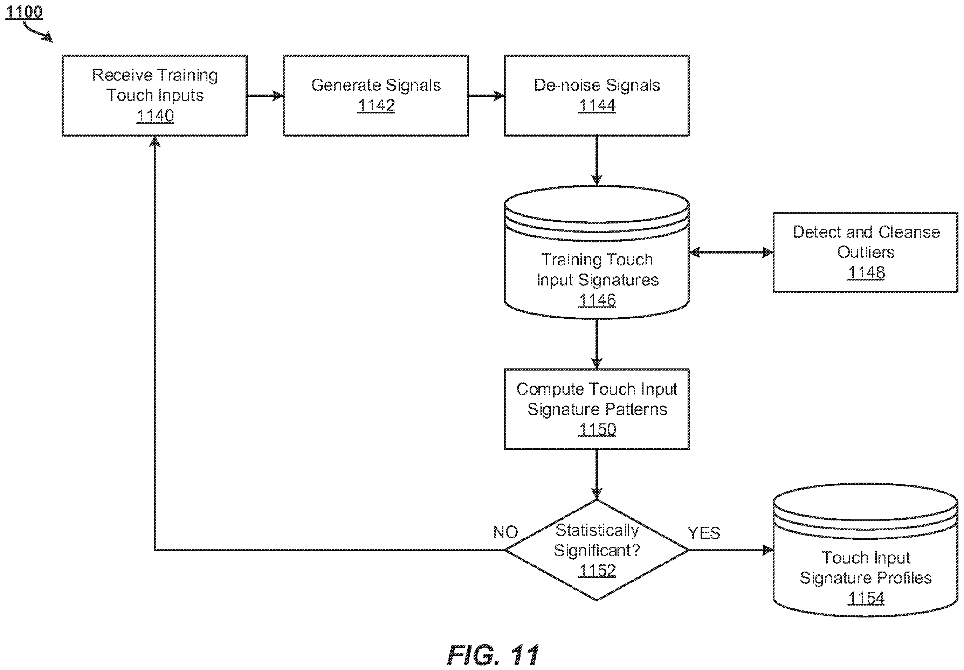

FIG. 11 illustrates block diagram 1200 of an active touch input signature training process according to examples of the present disclosure. The touch input signature training process is considered active in that it is user initiated. For example, a user interface may provide a user the ability to initiate the active touch input signature training process to provide training touch inputs actively in succession. These training touch inputs are used to compute the touch input signatures for each of a variety of types of inputs (e.g., single tap, double tap, triple tap, corner tap, etc.).

In this example, a series of training touch inputs is received (block 1140) onto a mobile device. Signals corresponding to the training touch inputs are generated (block 1142). The signals are then analyzed by de-noising (i.e., via applying a wavelet transform) (block 1144). A training touch input signature of the training touch inputs is generated (block 1146). This repository may be further analyzed to identify and eliminate any outlier patterns within the touch input training signatures (block 1148).

The remaining touch input training signatures are analyzed to compute typical tap signature patterns (block 1150). The touch input signature patterns are then analyzed to determine whether the touch input signature patterns are statistically significant (block 1152). If the touch input signature patterns are statistically significant, the computed typical touch input signature patterns are stored in a data store such as a touch input signature profiles database (block 1154). The touch input signature patterns stored in the touch input signature profiles database may be useful to detect touch inputs in the future, such as when determining whether to perform a discrete cursor movement.

If the touch input signature patterns are not statistically significant, new and/or additional training touch inputs may be received (block 1140). Alternatively, the active touch input signature training process may terminate. It should be understood that this process may be used to adapt to single touch and multiple touch (e.g., double or triple touches) training inputs.

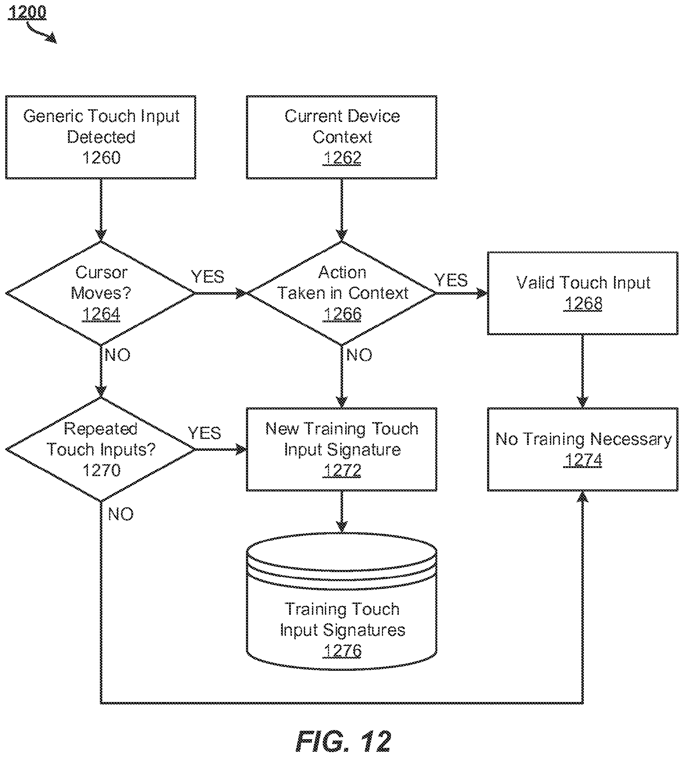

FIG. 12 illustrates a block diagram of a passive touch input signature training process according to examples of the present disclosure. In this example, touch inputs are automatically detected, and typical tap signatures adapt and improve over time through inferential training of touch inputs provided by the user through using a device upon which touch inputs are received for discrete cursor movement. In particular, when a generic touch input is detected (that is, a touch input provided by the user during the normal course of using a computing system to provide discrete cursor movement and not during an active training process) (block 1262) that may be different than those in the touch input signature profiles 1154 of FIG. 11, the computing system looks to see if the cursor is actually moved (i.e., it is determined whether a discrete cursor movement occurred) (block 1264).

If no discrete cursor movement occurred, then solution looks to see if the user immediately provides a similar tap (i.e., whether multiple touch inputs were provided repeatedly) (block 1270). If the user provides a similar touch input several times, then it is concluded that this touch input should be recognized in the future. Thus, the new, unrecognized touch inputs are captured as new training touch input signatures (block 1272) and are stored as training touch input signatures (block 1276).

Upon having a sufficient number of such touch inputs, the process in FIG. 11 is performed for these new touch inputs. If the cursor does discretely move in response to the received generic touch input, then the process of FIG. 11 considers whether an appropriate action is taken in the current context (e.g., cursor moves in a text box and the text field is edited) (blocks 1262 and 1266). If such action is taken, then the touch input is properly recognized as a valid touch input (block 1268) and no action is required (*e.g*. no training is necessary (block 1274)). If an appropriate action is not taken (block 1266) within the current context (block 1262), then it is concluded that the touch input is not properly recognized, and therefore the training touch input signature is stored as a new training touch input signature (block 1272). As before, upon having a sufficient number of training touch inputs, the process illustrated in FIG. 11 is repeated.

It should be emphasized that the above-described examples are merely possible examples of implementations and set forth for a clear understanding of the present disclosure. Many variations and modifications may be made to the above-described examples without departing from the scope of the present invention as defined by the appended claims.

## Claims

1. A non-transitory computer-readable storage medium (204, 304) storing instructions (220, 222, 224, 226, 320, 322) that, when executed by a processor (202), cause the processor to:
analyze (404) a plurality of signals generated by a sensor (106) of a computing system (100, 200), the plurality of signals corresponding to a series of training touch inputs received on a surface of the computing system, each of the plurality of signals comprising for each of a plurality of consecutive time periods a corresponding signal strength; and
generate (406) a touch input signature for discrete cursor movement based on the analysis of the plurality of signals corresponding to the series of training touch inputs, **characterized in that** the touch input signature represents a tolerance band (1030) having an outer bound (1032) and an inner bound (1034), wherein a geometry of the touch input signature captures for each of the plurality of time periods a range of the corresponding signal strengths of the training touch inputs provided by a user in a personalized manner so that future touch inputs that fall within the tolerance band are recognized and accepted resulting in a discrete cursor movement, while touch inputs that fall outside the tolerance band are rejected resulting in no discrete cursor movement.

2. The non-transitory computer-readable storage medium of claim 1 storing instructions that, when executed by the processor, further cause the processor to:
determine whether the touch input signature is statistically significant; and store the touch input signature to a data store responsive to determining that the touch input signature is statistically significant.

3. The non-transitory computer-readable storage medium of claim 1 storing instructions that, when executed by the processor, further cause the processor to:
de-noise the plurality of signals corresponding to the series of training touch inputs.

4. The non-transitory computer-readable storage medium of claim 3, wherein de-noising the plurality of signals further comprises applying a discrete wavelet transform to the plurality of signals.

5. The non-transitory computer-readable storage medium of claim 1 storing instructions that, when executed by the processor, further cause the processor to:
generate a discrete cursor movement from a set of discrete cursor movements when a detected touch input is substantially within the tolerance band.

6. A computing system (100, 200) comprising:
a sensor (106) to generate a plurality of signals corresponding to a detected series of training touch inputs on a surface of the computing system, each of the plurality of signals comprising for each of a plurality of consecutive time periods a corresponding signal strength;
a touch input analysis module (120) to analyze the plurality of signals generated by the sensor; and
a touch input signature generation module (122) to generate a touch input signature for discrete cursor movement based on the analysis of the plurality of signals corresponding to the detected series of training touch inputs,
**characterized in that** the touch input signature represents a tolerance band (1030) having an outer bound (1032) and an inner bound (1034), wherein a geometry of the touch input signature captures for each of the plurality of time periods a range of the corresponding signal strengths of the training touch inputs provided by a user in a personalized manner so that future touch inputs that fall within the tolerance band are recognized and accepted resulting in a discrete cursor movement, while touch inputs that fall outside the tolerance band are rejected resulting in no discrete cursor movement.

7. The computing system of claim 6, wherein the sensor comprises an accelerometer.

8. The computing system of claim 6, wherein the touch input analysis module analyzes the plurality of signals generated by the sensor by:
de-noising the plurality of signals corresponding to the detected series of training touch inputs; and
detecting any outliers in the plurality of signals corresponding to the detected series of training touch inputs.

9. The computing system of claim 8, wherein de-noising the plurality of signals corresponding to the detected series of training touch inputs includes applying a wavelet transform to the plurality of signals.

10. The computing system of claim 6, further comprising:
a statistical significance module to determine whether the touch input signature is statistically significant and to store the touch input signature to a data store responsive to determining that the touch input signature is statistically significant.

11. A method (500) comprising:
generating (504), by a computing system (100, 200), a plurality of signals corresponding to a series of training touch inputs received on a surface of the computing system, each of the plurality of signals comprising for each of a plurality of consecutive time periods a corresponding signal strength;
generating (508), by the computing system, a touch input signature for discrete cursor movement based on the series of training touch inputs;
determining (510), by the computing system, whether the touch input signature is statistically significant; and
storing (512) the touch input signature to a data store responsive to determining that the touch input signature is statistically significant, **characterized in that** the touch input signature represents a tolerance band (1030) having an outer bound (1032) and an inner bound (1034), wherein a geometry of the touch input signature captures for each of the plurality of time periods a range of the corresponding signal strengths of the training touch inputs provided by a user in a personalized manner so that future touch inputs that fall within the tolerance band are recognized and accepted resulting in a discrete cursor movement, while touch inputs that fall outside the tolerance band are rejected resulting in no discrete cursor movement.

12. The method of claim 11, further comprising:
de-noising (506), by the computing system, the plurality of signals corresponding to the series of training touch inputs.

13. The method of claim 11, wherein de-noising the plurality of signals further comprises applying a discrete wavelet transform to the plurality of signals.

## Patentansprüche

1. Nichtflüchtiges computerlesbares Speichermedium (204, 304), das Anweisungen (220, 222, 224, 226, 320, 322) speichert, die, wenn sie durch einen Prozessor (202) ausgeführt werden, den Prozessor zu Folgendem veranlassen:
Analysieren (404) mehrerer Signale, die von einem Sensor (106) eines Computersystems (100, 200) erzeugt werden, wobei die mehreren Signale einer Reihe von Trainingsberührungseingaben entsprechen, die auf einer Oberfläche des Computersystems empfangen werden, wobei jedes der mehreren Signale für jeden von mehreren aufeinanderfolgenden Zeiträumen eine entsprechende Signalstärke umfasst; und
Erzeugen (406) einer Berührungseingabesignatur für eine eigenständige Cursorbewegung basierend auf der Analyse der mehreren Signale, die der Reihe von Trainingsberührungseingaben entsprechen, **dadurch gekennzeichnet, dass** die Berührungseingabesignatur ein Toleranzband (1030) darstellt, das eine äußere Grenze (1032) und eine innere Grenze (1034) aufweist, wobei eine Geometrie der Berührungseingabesignatur für jeden der mehreren Zeiträume einen Bereich der entsprechenden Signalstärken der von einem Benutzer bereitgestellten Trainingsberührungseingaben auf personalisierte Weise erfasst, so dass zukünftige Berührungseingaben, die innerhalb des Toleranzbandes liegen, erkannt und akzeptiert werden, was zu einer eigenständigen Cursorbewegung führt, während Berührungseingaben, die außerhalb des Toleranzbandes liegen, zurückgewiesen werden, was zu keiner eigenständigen Cursorbewegung führt.

2. Nichtflüchtiges computerlesbares Speichermedium nach Anspruch 1, das Anweisungen speichert, die, wenn sie durch den Prozessor ausgeführt werden, den Prozessor ferner zu Folgendem veranlassen:
Bestimmen, ob die Berührungseingabesignatur statistisch signifikant ist; und
Speichern der Berührungseingabesignatur in einem Datenspeicher, der auf die Bestimmung reagiert, dass die Berührungseingabesignatur statistisch signifikant ist.

3. Nichtflüchtiges computerlesbares Speichermedium nach Anspruch 1, das Anweisungen speichert, die, wenn sie durch den Prozessor ausgeführt werden, den Prozessor ferner zu Folgendem veranlassen:
Entrauschen der mehreren Signale, die der Reihe von Trainingsberührungseingaben entsprechen.

4. Nichtflüchtiges computerlesbares Speichermedium nach Anspruch 3, wobei das Entrauschen der mehreren Signale ferner die Anwendung einer diskreten Wavelet-Transformation auf die mehreren Signale umfasst.

5. Nichtflüchtiges computerlesbares Speichermedium nach Anspruch 1, das Anweisungen speichert, die, wenn sie durch den Prozessor ausgeführt werden, den Prozessor ferner zu Folgendem veranlassen:
Erzeugen einer eigenständigen Cursorbewegung aus einer Reihe von eigenständigen Cursorbewegungen, wenn eine erkannte Berührungseingabe im Wesentlichen innerhalb des Toleranzbandes liegt.

6. Rechensystem (100, 200), das Folgendes umfasst:
einen Sensor (106), um mehrere Signale zu erzeugen, die einer erfassten Reihe von Trainingsberührungseingaben auf einer Oberfläche des Computersystems entsprechen, wobei jedes der mehreren Signale für jeden von mehreren aufeinander folgenden Zeiträumen eine entsprechende Signalstärke umfasst;
ein Berührungseingabeanalysemodul (120) zum Analysieren der mehreren von dem Sensor erzeugten Signale; und
ein Berührungseingabesignaturerzeugungsmodul (122) zum Erzeugen einer Berührungseingabesignatur für eine eigenständige Cursorbewegung basierend auf der Analyse der mehreren Signale, die der erfassten Reihe von Trainingsberührungseingaben entsprechen, **dadurch gekennzeichnet, dass** die Berührungseingabesignatur ein Toleranzband (1030) darstellt, das eine äußere Grenze (1032) und eine innere Grenze (1034) aufweist, wobei eine Geometrie der Berührungseingabesignatur für jeden der mehreren Zeiträume einen Bereich der entsprechenden Signalstärken der von einem Benutzer bereitgestellten Trainingsberührungseingaben auf personalisierte Weise erfasst, so dass zukünftige Berührungseingaben, die innerhalb des Toleranzbandes liegen, erkannt und akzeptiert werden, was zu einer eigenständigen Cursorbewegung führt, während Berührungseingaben, die außerhalb des Toleranzbandes liegen, zurückgewiesen werden, was zu keiner eigenständigen Cursorbewegung führt.

7. Rechensystem nach Anspruch 6, wobei der Sensor einen Beschleunigungsmesser umfasst.

8. Rechensystem nach Anspruch 6, wobei das Berührungseingabeanalysemodul die mehreren durch den Sensor erzeugten Signale durch Folgendes analysiert:
Entrauschen der mehreren Signale, die der erfassten Reihe von Trainingsberührungseingaben entsprechen; und
Erfassen von Ausreißern in den mehreren Signalen, die der erfassten Reihe von Trainingsberührungseingaben entsprechen.

9. Rechensystem nach Anspruch 8, wobei das Entrauschen der mehreren Signale, die der erfassten Reihe von Trainingsberührungseingaben entsprechen, die Anwendung einer Wavelet-Transformation auf die mehreren Signale einschließt.

10. Rechensystem nach Anspruch 6, das ferner Folgendes umfasst:
ein Statistische-Signifikanz-Modul, um zu bestimmen, ob die Berührungseingabesignatur statistisch signifikant ist, und um die Berührungseingabesignatur in einem Datenspeicher zu speichern, der auf die Bestimmung reagiert, dass die Berührungseingabesignatur statistisch signifikant ist.

11. Verfahren (500), das Folgendes umfasst:
Erzeugen (504), durch ein Rechensystem (100, 200), mehrerer Signale, die einer Reihe von Trainingsberührungseingaben entsprechen, die auf einer Oberfläche des Rechensystems empfangen werden, wobei jedes der mehreren Signale für jeden von mehreren aufeinanderfolgenden Zeiträumen eine entsprechende Signalstärke umfasst;
Erzeugen (508), durch das Rechensystem, einer Berührungseingabesignatur für die eigenständige Cursorbewegung basierend auf der Reihe von Trainingsberührungseingaben;
Bestimmen (510), durch das Rechensystem, ob die Berührungseingabesignatur statistisch signifikant ist; und
Speichern (512) der Berührungseingabesignatur in einem Datenspeicher als Reaktion auf die Bestimmung, dass die Berührungseingabesignatur statistisch signifikant ist, **dadurch gekennzeichnet, dass** die Berührungseingabesignatur ein Toleranzband (1030) darstellt, das eine äußere Grenze (1032) und eine innere Grenze (1034) aufweist, wobei eine Geometrie der Berührungseingabesignatur für jeden der mehreren Zeiträume einen Bereich der entsprechenden Signalstärken der von einem Benutzer bereitgestellten Trainingsberührungseingaben auf personalisierte Weise erfasst, so dass zukünftige Berührungseingaben, die innerhalb des Toleranzbandes liegen, erkannt und akzeptiert werden, was zu einer eigenständigen Cursorbewegung führt, während Berührungseingaben, die außerhalb des Toleranzbandes liegen, zurückgewiesen werden, was zu keiner eigenständigen Cursorbewegung führt.

12. Verfahren nach Anspruch 11, das ferner Folgendes umfasst:
Entrauschen (506), durch das Rechensystem, mehrerer Signale, die der Reihe von Trainingsberührungseingaben entsprechen.

13. Verfahren nach Anspruch 11, wobei das Entrauschen mehrerer Signale ferner eine Anwendung einer diskreten Wavelet-Transformation auf die mehreren Signale umfasst.

## Revendications

1. Support de stockage non transitoire lisible par ordinateur (204, 304) stockant des instructions (220, 222, 224, 226, 320, 322) qui, lorsqu'elles sont exécutées par un processeur (202), amènent le processeur à :
analyser (404) une pluralité de signaux générés par un capteur (106) d'un système informatique (100, 200), la pluralité de signaux correspondant à une série d'entrées tactiles d'apprentissage reçues sur une surface du système informatique, chacun de la pluralité de signaux comprenant une intensité de signal correspondante pour chacune d'une pluralité de périodes de temps consécutives ; et
générer (406) une signature d'entrée tactile pour un mouvement de curseur discret sur la base de l'analyse de la pluralité de signaux correspondant à la série d'entrées tactiles d'apprentissage, **caractérisé en ce que** la signature d'entrée tactile représente une bande de tolérance (1030) ayant une limite extérieure (1032) et une limite intérieure (1034), une géométrie de la signature d'entrée tactile capturant, pour chacune de la pluralité de périodes de temps, une plage des intensités de signal correspondantes des entrées tactiles d'apprentissage fournies par un utilisateur de manière personnalisée afin que les futures entrées tactiles qui s'inscrivent dans la bande de tolérance soient reconnues et acceptées, ce qui entraîne un mouvement de curseur discret, tandis que les entrées tactiles qui se trouvent en dehors de la bande de tolérance sont rejetées, ce qui n'entraîne aucun mouvement discret du curseur.

2. Support de stockage non transitoire lisible par ordinateur selon la revendication 1, stockant des instructions qui, lorsqu'elles sont exécutées par le processeur, amènent en outre le processeur à :
déterminer si la signature d'entrée tactile est statistiquement significative ; et
stocker la signature d'entrée tactile dans un magasin de données en réponse à la détermination du fait que la signature d'entrée tactile est statistiquement significative.

3. Support de stockage non transitoire lisible par ordinateur selon la revendication 1, stockant des instructions qui, lorsqu'elles sont exécutées par le processeur, amènent en outre le processeur à :
débruiter la pluralité de signaux correspondant à la série d'entrées tactiles d'apprentissage.

4. Support de stockage lisible par ordinateur non transitoire selon la revendication 3, dans lequel le débruitage de la pluralité de signaux comprend en outre l'application d'une transformée en ondelettes discrète à la pluralité de signaux.

5. Support de stockage non transitoire lisible par ordinateur selon la revendication 1, stockant des instructions qui, lorsqu'elles sont exécutées par le processeur, amènent en outre le processeur à :
générer un mouvement de curseur discret à partir d'un ensemble de mouvements de curseur discrets lorsqu'une entrée tactile détectée est sensiblement dans la bande de tolérance.

6. Système informatique (100, 200) comprenant :
un capteur (106) pour générer une pluralité de signaux correspondant à une série détectée d'entrées tactiles d'apprentissage sur une surface du système informatique, chacun de la pluralité de signaux comprenant une intensité de signal correspondante pour chacune d'une pluralité de périodes de temps consécutives ;
un module d'analyse d'entrée tactile (120) pour analyser la pluralité de signaux générés par le capteur ; et
un module de génération de signature d'entrée tactile (122) pour générer une signature d'entrée tactile pour un mouvement de curseur discret sur la base de l'analyse de la pluralité de signaux correspondant à la série détectée d'entrées tactiles d'apprentissage,
**caractérisé en ce que** la signature d'entrée tactile représente une bande de tolérance (1030) ayant une limite extérieure (1032) et une limite intérieure (1034), une géométrie de la signature d'entrée tactile capturant, pour chacune de la pluralité de périodes de temps, une plage des intensités de signal correspondantes des entrées tactiles d'apprentissage fournies par un utilisateur de manière personnalisée afin que les futures entrées tactiles qui s'inscrivent dans la bande de tolérance soient reconnues et acceptées, ce qui entraîne un mouvement de curseur discret, tandis que les entrées tactiles qui s'inscrivent en dehors de la bande de tolérance sont rejetées, ce qui n'entraîne aucun mouvement de curseur discret.

7. Système informatique selon la revendication 6, dans lequel le capteur comprend un accéléromètre.

8. Système informatique selon la revendication 6, dans lequel le module d'analyse d'entrée tactile analyse la pluralité de signaux générés par le capteur en :
débruitant la pluralité de signaux correspondant à la série détectée d'entrées tactiles d'apprentissage ; et
détectant toute valeur aberrante dans la pluralité de signaux correspondant à la série détectée d'entrées tactiles d'apprentissage.

9. Système informatique selon la revendication 8, dans lequel le débruitage de la pluralité de signaux correspondant à la série détectée d'entrées tactiles d'apprentissage comporte l'application d'une transformée en ondelettes à la pluralité de signaux.

10. Système informatique selon la revendication 6, comprenant en outre :
un module de signification statistique pour déterminer si la signature d'entrée tactile est statistiquement significative et pour stocker la signature d'entrée tactile dans un magasin de données en réponse à la détermination du fait que la signature d'entrée tactile est statistiquement significative.

11. Procédé (500) comprenant :
la génération (504), par un système informatique (100, 200), d'une pluralité de signaux correspondant à une série d'entrées tactiles d'apprentissage reçues sur une surface du système informatique, chacun de la pluralité de signaux comprenant une intensité de signal correspondante pour chacune d'une pluralité de périodes de temps ;
la génération (508), par le système informatique, d'une signature d'entrée tactile pour un mouvement de curseur discret sur la base de la série d'entrées tactiles d'apprentissage ;
la détermination (510), par le système informatique, du fait de savoir si la signature d'entrée tactile est statistiquement significative ; et
le stockage (512) de la signature d'entrée tactile dans un magasin de données en réponse à la détermination du fait que la signature d'entrée tactile est statistiquement significative,
**caractérisé en ce que** la signature d'entrée tactile représente une bande de tolérance (1030) ayant une limite extérieure (1032) et une limite intérieure (1034), une géométrie de la signature d'entrée tactile capturant pour chacune de la pluralité de périodes de temps une plage des intensités de signal correspondantes des entrées tactiles d'apprentissage fournies par un utilisateur de manière personnalisée afin que les futures entrées tactiles qui s'inscrivent dans la bande tolérance sont reconnues et acceptées, ce qui entraîne un mouvement de curseur discret, tandis que les entrées tactiles qui se trouvent en dehors de la bande de tolérance sont rejetées, ce qui n'entraîne aucun mouvement de curseur discret.

12. Procédé selon la revendication 11, comprenant en outre :
le débruitage (506), par le système informatique, de la pluralité de signaux correspondant à la série d'entrées tactiles d'apprentissage.

13. Procédé selon la revendication 11, dans lequel le débruitage de la pluralité de signaux comprend en outre l'application d'une transformée en ondelettes discrète à la pluralité de signaux.
